# EUROPEAN PATENT SPECIFICATION

(11) **EP 1 081 007 B1**
(45) Date of publication and mention of the grant of the patent: **08.08.2007**
(21) Application number: 99308337.7
(22) Date of filing: 21.10.1999
(51) Int. Cl.: B60T 8/48

(54) **Brake pressure control device for vehicle**
Bremsdruckregelvorrichtung für Kraftfahrzeuge
Système de contrôle de pression de freinage pour véhicule

(30) Priority: 23.08.1999 KR 9934881
(43) Date of publication of application: 07.03.2001
(73) Proprietor: Mando Corporation, Pyungtaek-si, Kyongki-do (KR)
(72) Inventor: Park, Soung-Jun, Posung-Myun, Pyungtak-City, Kyungki-Do (KR)
(74) Representative: Pratt, David Martin

(56) References cited:
- WO-A-98/25803
- DE-A- 4 220 835
- DE-A- 4 333 568
- DE-A- 19 537 927
- DE-A- 19 806 724
- US-A- 5 605 385

## Description

### BACKGROUND OF THE INVENTION

### 1) Field of the invention

The present invention relates to a brake pressure control device and, more particularly, to a brake pressure control device for a vehicle which can provide a proper braking force for preventing slip of wheels during a braking or starting operation of a vehicle. US 6 015 192 discloses a brake pressure control apparatus for a vehicle is considered being the closest prior art.

### 2) Description of Related Art

Recently, the automobile is generally equipped with various system for improving its traveling stability, such as an anti-lock brake system(ABS), a brake traction control system(BTCS), and a vehicle dynamic control(VDC) system. The ABS is a system for ensuring a stable braking capability by properly controlling the brake pressure when the vehicle is braked on a slippery road. The BTCS is a system for preventing the wheels from slipping when the automobile is rapidly accelerated to start on a slippery road. And, the VDC is a system for enhancing a traveling stability by applying proper brake pressure to the wheels, specially when the driver can not drive the vehicle at driver's will by the external force during driving the vehicle at high speed.

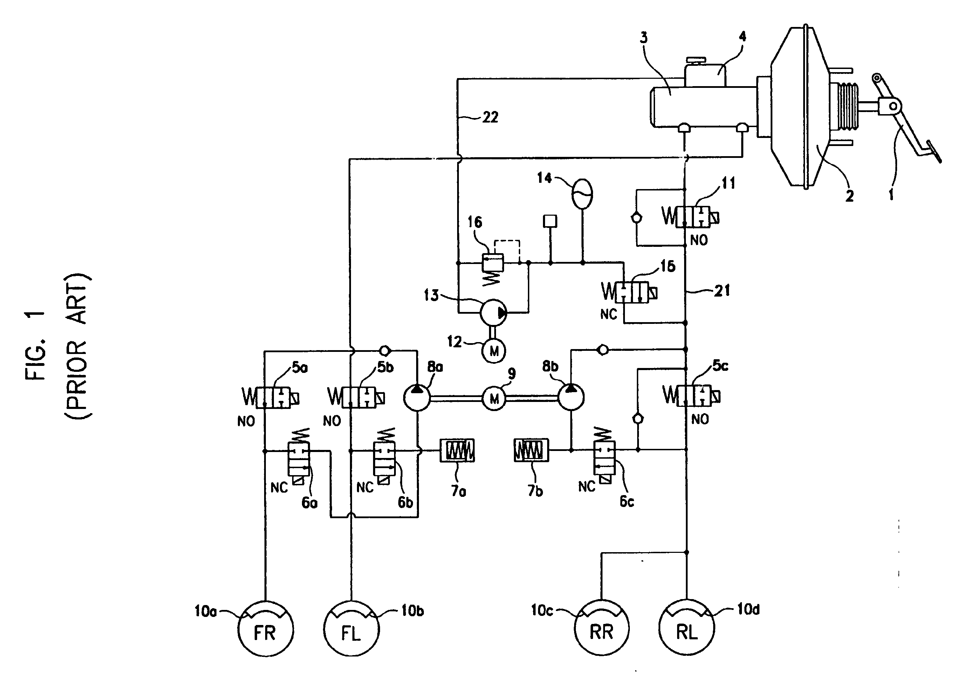

Such a brake pressure control device for a vehicle is disclosed in Japanese laid-open utility model No. 4-116274. This will be described hereinafter with reference to Fig. 1.

As shown in the drawing, the conventional brake pressure control device for a vehicle comprises wheel cylinders 10a, 10b, 10c and 10d mounted on front wheels FR and FL and rear wheels RR and RL, a brake pedal 1 operated by a driver, a booster 2 for generating large braking force by cooperating with the pedal 1, a fluid tank 4 for storing fluid, and a master cylinder 3 which receives boosted force from the booster 2 to generate brake pressure using the fluid stored in the fluid tank 4 and then transmits brake pressure to the wheel cylinders 10a, 10b, 10c and 10d.

In order to control the brake pressure transferred to the wheel cylinders 10a, 10b, 10c and 10d from the master cylinder 3, normal open solenoid inflow-valves 5a, 5b and 5c are disposed on fluid paths through which the brake pressure is applied to the wheel cylinders 10a, 10b, 10c and 10d from the master cylinder 3, and normal close solenoid outflow-valves 6a, 6b and 6c are disposed on fluid paths through which the brake pressure discharged from the wheel cylinders 10a, 10b, 10c and 10d is returned to the master cylinder 3 or the normal open solenoid inflow-valves 5a, 5b and 5c.

Disposed on each downstream side of the normal close solenoid outflow-valves 6a, 6b and 6c are low-pressure accumulators 7a and 7b for temporally storing brake fluid discharged from each of the wheel cylinders 10a, 10b, 10c and 10d, a hydraulic pumps 8a and 8b for ABS, and a motor 9 for driving the hydraulic pumps 8a and 8b.

In addition, there is provided with an electronic control unit(ECU - not shown) which analyzes the wheel velocity detected by a wheel speed sensor (not shown) and controls the operation of the brake system according to the results of analysis.

A first normal open solenoid valve 11 is disposed on a fluid path 21 connecting a discharging port of the hydraulic pump 8b of the rear wheel RR and RL sides to an outlet side of the master cylinder 3. The valve 11 is maintained open in a normal state, and is closed by the ECU when at the beginning of BTCS or VDC operation.

In addition, a fluid path 22, which is branched off from the fluid path 21 to an outlet side of the fluid tank 4, is provided. Disposed on the fluid path 22 are a hydraulic pump 13 which is driven by a motor 12, and an accumulator 14 which stores fluid discharged from the hydraulic pump 13. And, a second normal close solenoid valve 15, which is opened by the ECU during BTCS or VDC operation, is disposed on an outlet side of the accumulator 14.

A relief valve 16 for returning fluid to the fluid tank 4 when the brake fluid pressure increases above a certain level during BTCS or VDC operation, is disposed on an inlet side of the accumulator 14.

In the above described conventional brake pressure control device for vehicle, when the ECU detects the slip of the driving wheels RR and RL, BTCS or VDC operation starts. At the same time, the ECU drives the hydraulic pump 13, closes the first normal open solenoid valve 11 to cut off the communication of the master cylinder 3 with the wheel cylinders 10c and 10d, and opens the second normal close solenoid valve 15 to communicate the accumulator 14 communicate with the wheel cylinders 10c and 10d. By this, the brake fluid is fed to the wheel cylinders 10c and 10d of the driving wheels RR and RL from the accumulator 14 through the second solenoid valve 15 and the inflow-valve 5c, thereby preventing the slip of the driving wheels RR and RL. And then, the brake pressure is converted to be unchanged or reduced by the ECU. When the slip of the driving wheels RR and RL is detected again, the brake pressure is increased as aforementioned.

However, in the above described conventional brake pressure control device for vehicle, the hydraulic pump 13 for BTCS or VDC is provided additionally besides the hydraulic pumps 8a and 8b for ABS. And, since the brake fluid pressure in the accumulator 14 should be always maintained above a certain level by the hydraulic pump 13, the large-sized hydraulic pump 13 and the high-pressure accumulator 14 are necessarily required, thus a brake pressure control device becomes large and heavy, and manufacturing cost is increased.

A further known hydraulic brake system is described in US patent specification 5605385.

### SUMMARY OF THE INVENTION

Therefore, the present invention has been made in an effort to solve the above-described problems.

It is an aim of the present invention to provide a brake pressure control device for a vehicle which can control traveling unstability effectively in its early stages and can be manufactured in light and small-sized.

The present invention provides a brake pressure control device for a vehicle, the control device comprising a master cylinder for forming brake pressure using fluid, a wheel cylinder exerting braking force to each wheel of the vehicle by receiving the brake pressure, a normally-open solenoid inflow-valve disposed on an inlet side of the wheel cylinder for controlling flow of the brake fluid pressure, a normally-closed solenoid outflow-valve disposed on an outlet side of the wheel cylinder for controlling flow of the brake fluid pressure, a hydraulic pump for pumping the brake fluid pressure to the wheel cylinder, an electronic control unit for controlling flow of the brake fluid pressure applied to the wheel cylinder, a first normally-open solenoid valve disposed in a first fluid path connecting a discharging port of the hydraulic pump to an outlet side of the master cylinder to direct the brake fluid pressure discharged from the master cylinder to the wheel cylinder via the inflow-valve when a braking operation is executed, a normally-open electric shuttle valve disposed in a fluid path connecting the outlet side of the master cylinder to a suction port of the hydraulic pump, a medium-pressure accumulator disposed in a bypass fluid path bypassing the brake fluid pressure discharged from the discharging port of the hydraulic pump to the suction port thereof to store the brake fluid having prescribed pressure; and a second normally-closed solenoid valve disposed in the bypass fluid path between the medium-pressure accumulator and the suction port of the hydraulic pump to maintain the brake fluid pressure stored in the medium-pressure accumulator, wherein, at the beginning of brake traction control system or vehicle dynamic control operation, the electronic control unit closes the first normally-open solenoid valve and the shuttle valve to cut off the communication of the master cylinder with the wheel cylinder, opens the second normally-closed solenoid valve to communicate the medium-pressure accumulator with the suction port of the hydraulic pump, and drives the hydraulic pump, whereby the brake fluid pressure stored in the medium-pressure accumulator is fed to the wheel cylinder to increase braking force; characterised in that the control device further comprises a relief valve disposed in the bypass fluid path between the discharging port of the hydraulic pump and the medium-pressure accumulator to direct the brake fluid discharged from the hydraulic pump to the medium-pressure accumulator when the brake fluid pressure increases above a certain level during brake traction control system or vehicle dynamic control operation, characterised by a second fluid path connecting the discharging port of the hydraulic pump to the outlet side of the master cylinder, and a further relief valve disposed in the second fluid path to direct the brake fluid discharged from the hydraulic pump to the master cylinder when the brake fluid pressure increases above a certain level during brake traction control system or vehicle dynamic control operation.

The control device may further comprise a fluid detecting sensor installed in the medium-pressure accumulator.

If the brake fluid existing within the medium-pressure accumulator is detected to be decreased below a certain level by the fluid detecting sensor, the electronic control unit closes the normally-open solenoid inflow-valve and the first normally-open solenoid valve to cut off the communication of the master cylinder with the wheel cylinder, and drives the hydraulic pump so as to suck the brake fluid within the master cylinder via the electric shuttle valve and discharge, whereby the brake fluid pressure is directed to the medium-pressure accumulator via the second relief valve.

In addition, whenever a driver starts the vehicle, the electronic control unit closes the normally-open solenoid inflow-valve and the first normally-open solenoid valve to cut off the communication of the master cylinder with the wheel cylinder, and drives the hydraulic pump so as to suck the brake fluid within the master cylinder via the electric shuttle valve and discharge, whereby the brake fluid is directed to the medium-pressure accumulator via the relief valve.

The electronic control unit counts the time and drives the hydraulic pump by periods set by the electronic control unit so as to store the break fluid in the medium-pressure accumulator repeatedly.

If the brake pressure control operation such as anti-lock brake system or brake traction control system or vehicle dynamic control is executed before it reaches the setting period, the electronic control unit resets the time counted before, and recounts the time after, the brake pressure control operation is finished.

The hydraulic pump is driven continuously during anti-lock brake system or brake traction control system or vehicle dynamic control operation.

### BRIEF DESCRIPTION OF THE DRAWINGS

The accompanying drawings, which are incorporated in and constitute a part of the specification, illustrate an embodiment of the invention, and together with the description, serve to explain the principles of the invention:
Fig. 1 is a schematic view illustrating a conventional brake pressure control device for a vehicle associated with a hydraulic circuit thereof;
Fig. 2 is a schematic view illustrating a brake pressure control device for a vehicle associated with a hydraulic circuit thereof according to a preferred embodiment of the present invention;
Fig. 3 is a hydraulic circuit illustrating a normal braking operation state of a brake pressure control device for a vehicle according to a preferred embodiment of the present invention;
Fig. 4 is a hydraulic circuit illustrating a pressure reducing mode of a brake pressure control device for a vehicle according to a preferred embodiment of the present invention during ABS operation;
Fig. 5 is a hydraulic circuit illustrating a pressure increasing mode of a brake pressure control device for a vehicle according to a preferred embodiment of the present invention during ABS operation;
Fig. 6 is a hydraulic circuit illustrating a pressure unchanging mode of a brake pressure control device for a vehicle according to a preferred embodiment of the present invention during ABS operation;
Fig. 7 is a hydraulic circuit illustrating a pressure applying mode of a brake pressure control device for a vehicle according to a preferred embodiment of the present invention during BTCS operation;

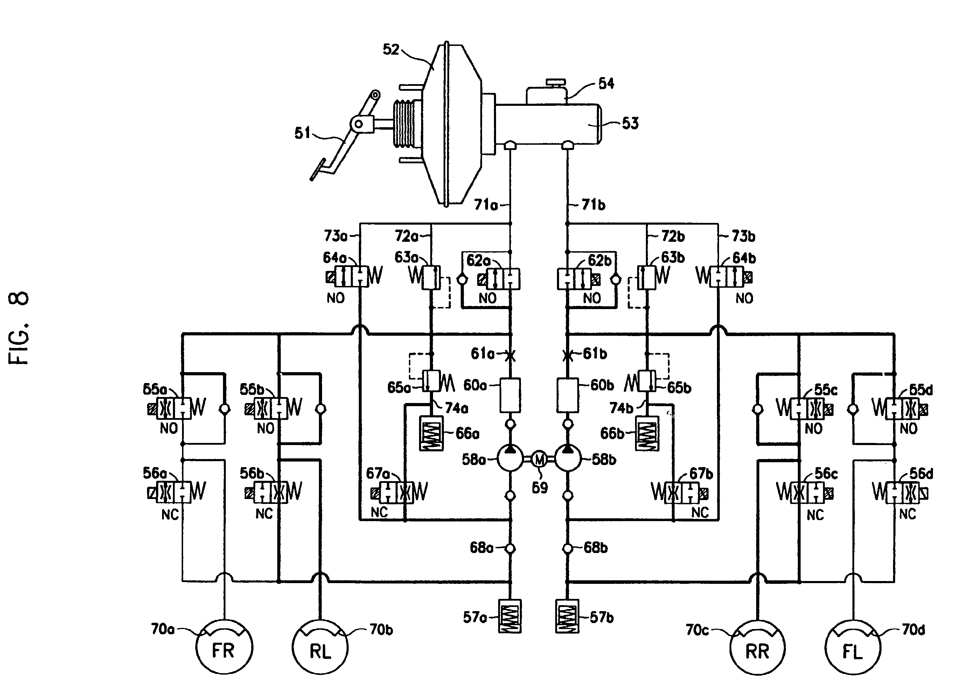

Fig. 8 is a hydraulic circuit illustrating a pressure decreasing mode of a brake pressure control device for a vehicle according to a preferred embodiment of the present invention during BTCS operation;
Fig. 9 is a hydraulic circuit illustrating a pressure unchanging mode of a brake pressure control device for a vehicle according to a preferred embodiment of the present invention during BTCS operation;
Fig. 10 is a hydraulic circuit illustrating VDC operation of a brake pressure control device for a vehicle according to a preferred embodiment of the present invention; and
Fig. 11 is a hydraulic circuit illustrating an operation of storing brake fluid pressure in a medium-pressure accumulator of a brake pressure control device for a vehicle according to a preferred embodiment of the present invention.

### DETAILED DESCRIPTION OF THE PREFERRED EMBODIMENTS

Reference will now be made in detail to the present preferred embodiment of the invention, an example of which is illustrated in the accompanying drawings. Wherever possible, the same reference numbers will be used throughout the drawings to refer to the same or like parts.

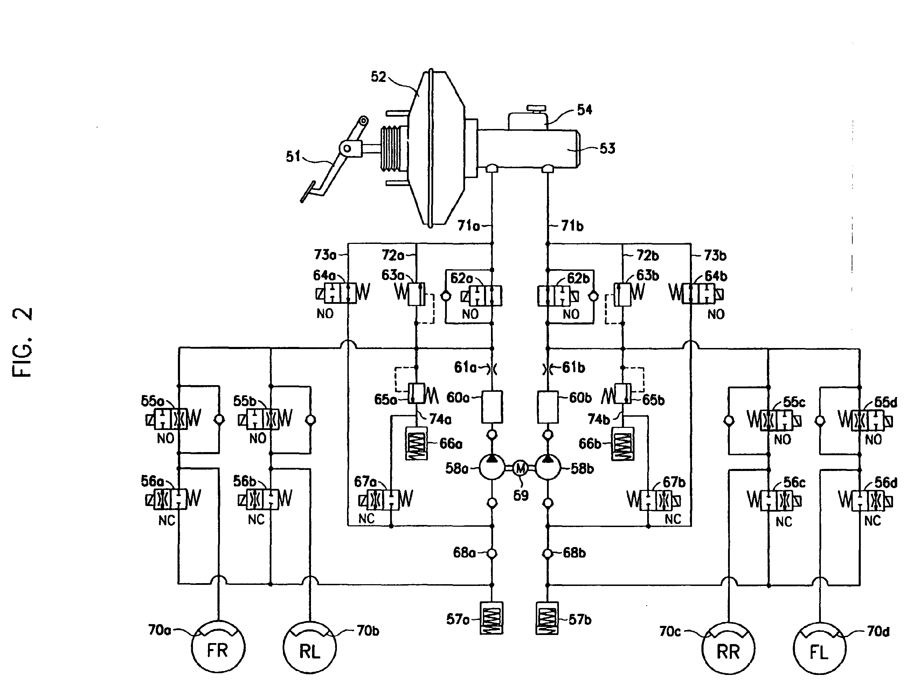

Fig. 2 is a schematic view illustrating a brake pressure control device for a vehicle associated with a hydraulic circuit thereof according to a preferred embodiment of the present invention.

As shown in the drawing, the brake pressure control device for a vehicle according to the present invention comprises wheel cylinders 70a, 70b, 70c and 70d mounted on front wheels FR and FL and rear wheels RR and RL, a brake pedal 51 operated by a driver, a booster 52 for generating large braking force by cooperating with the pedal 51, a fluid tank 54 for storing fluid, and a master cylinder 53 which receives boosted force from the booster 52 to generate brake pressure using the fluid stored in the fluid tank 54 and then transmits brake pressure to the wheel cylinders 70a, 70b, 70c and 70d.

In order to control the brake pressure transferred to the wheel cylinders 70a, 70b, 70c and 70d from the master cylinder 53, normal open solenoid inflow-valves 55a, 55b, 55c and 55d are disposed on fluid paths through which the brake pressure is applied to the wheel cylinders 70a, 70b, 70c and 70d from the master cylinder 53, and normal close solenoid outflow-valves 56a, 56b, 56c and 56d are disposed on fluid paths through which the brake pressure discharged from the wheel cylinders 70a, 70b, 70c and 70d is returned to the master cylinder 53 or the normal open solenoid inflow-valves 55a, 55b, 55c and 55d.

Disposed on the downstream side of the outflow-valves 56a, 56b, 56c and 56d are low-pressure accumulators 57a and 57b for temporally storing brake fluid discharged from the wheel cylinders 70a, 70b, 70c and 70d, a hydraulic pumps 58a and 58b for ABS which pump the brake fluid within the low-pressure accumulators 57a and 57b to return forcedly to the master cylinder 53 or the inflow-valves 55a, 55b, 55c and 55d, a motor 59 for driving the hydraulic pumps 58a and 58b, and high-pressure accumulators 60a and 60b and orifices 61a and 61b for reducing a radical wave of the brake fluid pressure pumped by the hydraulic pumps 58a and 58b.

In addition, there is provided with an electronic control unit(ECU) which analyzes the wheel velocity detected by a wheel speed sensor (not shown) and controls the operation of the brake system according to the results of analysis.

First normal open solenoid valves 62a and 62b are disposed respectively on first fluid paths 71a and 71b which connect discharging ports of the hydraulic pumps 58a and 58b to an outlet side of the master cylinder 53. The first solenoid valves 62a and 62b are maintained open in a normal state so that the brake fluid discharged from the master cylinder 53 can be fed to the wheel cylinders 70a, 70b, 70c and 70d through the inflow-valves 55a, 55b, 55c and 55d, while the first solenoid valves 62a and 62b are closed by the ECU when at the beginning of BTCS or VDC operation, which will be described in detail later.

Also, first relief valves 63a and 63b are disposed respectively on second fluid paths 72a and 72b which connect the discharging ports of the hydraulic pumps 58a and 58b to the outlet side of the master cylinder 53 additionally. When the brake fluid pressure discharged from the hydraulic pumps 58a and 58b increases above a certain level during BTCS or VDC operation, the brake fluid is returned to the master cylinder 53 through the first relief valves 63a and 63b.

Disposed on third fluid paths 73a and 73b which connect the outlet side of the master cylinder 53 to the suction ports of the hydraulic pumps 58a and 58b, are normal open electric shuttle valves 64a and 64b, which will be described later.

The brake pressure control device for a vehicle according to the present invention further includes bypass fluid paths 74a and 74b for bypassing the brake fluid discharged from the discharging ports of the hydraulic pumps 58a and 58b to the suction ports thereof. Disposed on the bypass fluid paths 74a and 74b are medium-pressure accumulators 66a and 66b in which the brake fluid pressure is stored at a certain level. Disposed on the bypass fluid paths 74a and 74b between the medium-pressure accumulators 66a and 66b and the suction ports of the hydraulic pumps 58a and 58 are second normal close solenoid valves 67a and 67b which maintain the brake fluid pressure stored in the medium-pressure accumulators 66a and 66b, the valves 67a and 67b being opened to communicate the medium-pressure accumulators 66a and 66b with the suction ports of the hydraulic pumps 58a and 58b during BTCS or VDC operation. And, disposed on the bypass fluid paths 74a and 74b between the discharging ports of the hydraulic pumps 58a and 58b and the medium-pressure accumulators 66a and 66b are second relief valves 65a and 65b for directing the brake fluid discharged from the hydraulic pumps 58a and 58b to the medium-pressure accumulators 66a and 66b when the brake fluid pressure increases above a certain level during BTCS or VDC operation.

In addition, a fluid detecting sensor(not shown) is installed in the medium-pressure accumulators 66a and 66b, which will be described later.

The operation of the brake pressure control device for a vehicle according to the present invention will now be described in detail.

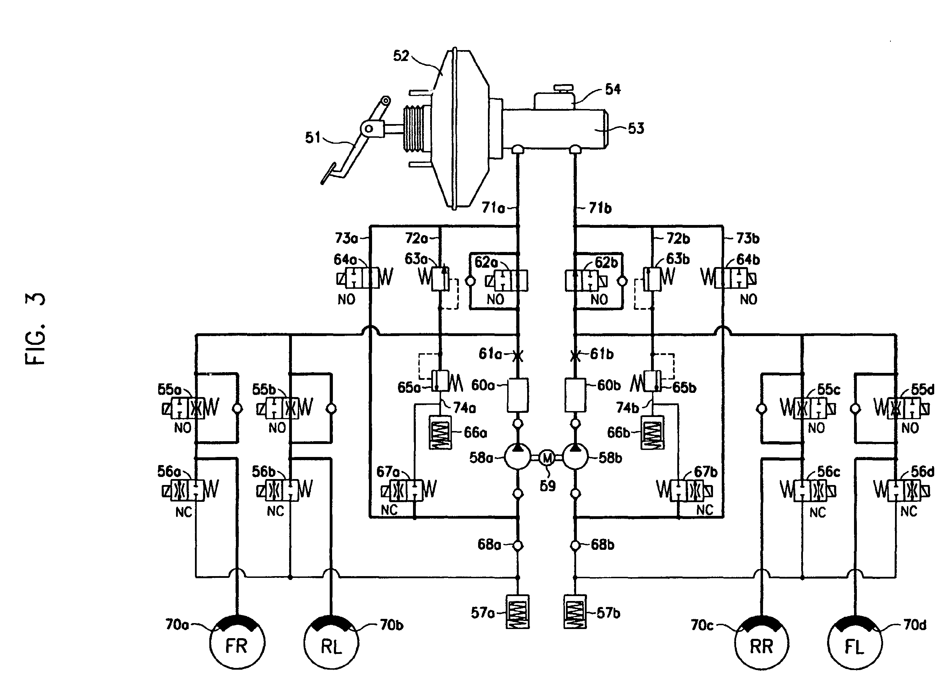

Fig. 3 is a hydraulic circuit illustrating a normal braking operation state of a brake pressure control device for a vehicle according to the present invention.

As shown in the drawing, when the brake pedal 51 is operated by the driver to reduce a speed of the vehicle or maintain a stopping state, the brake fluid pressure is generated by the master cylinder 53, and the first normal open solenoid valves 62a and 62b and the normal open electric shuttle valves 64a and 64b are maintained open. At this time, the brake fluid pressure is fed to the suction ports of the hydraulic pumps 58a and 58b via the shuttle valves 64a and 64b, while the brake fluid pressure is also fed to the high-pressure accumulators 60a and 60b disposed on the discharging ports of the pumps 58a and 58b via the first solenoid valves 62a and 62b, so the flow of the brake fluid through the pumps 58a and 58b is prevented. Also, the brake fluid passed through the shuttle valves 64a and 64b is prevented from being fed to the low-pressure accumulators 57a and 57b by check valves 68a and 68b, so the flow of the brake fluid through the third fluid paths 73a and 73b is prevented. Accordingly, the brake fluid pressure generated from the master cylinder 53 is supplied to the wheel cylinders 70a, 70b, 70c and 70d via the first normal open solenoid valves 62a and 62b and the normal open solenoid inflow-valves 55a, 55b, 55c and 55d to execute a brake function. At this time, since the normal close solenoid outflow-valves 56a, 56b, 56c and 56d disposed on each outlet side of the wheel cylinders 70a, 70b, 70c and 70d are maintained closed, the brake fluid pressure within the fluid path between the master cylinder 53 and the wheel cylinders 70a, 70b, 70c and 70d is increased, thereby applying the braking force to the wheel cylinders 70a, 70b, 70c and 70d.

When the driver decreases the braking pressure applied to the brake pedal 51 to reduce the braking force or release the braking operation, the brake fluid within the wheel cylinders 70a, 70b, 70c and 70d is returned to the master cylinder 53.

During such a normal braking operation state, if excessive braking force is applied to the wheel cylinders 70a, 70b, 70c and 70d or the braking force becomes higher than frictional force between the wheels FR, RL, RR and FL and the road surface due to a change in a road surface condition. As a result, the vehicle loses its steering control, the braking distance becomes longer, or the vehicle body is spined. Therefore, the ant-lock brake system should be properly controlled in three modes(a pressure increasing mode, a pressure reducing mode, and a pressure unchanging mode) to prevent the above problems. This will be described more in detail hereinafter.

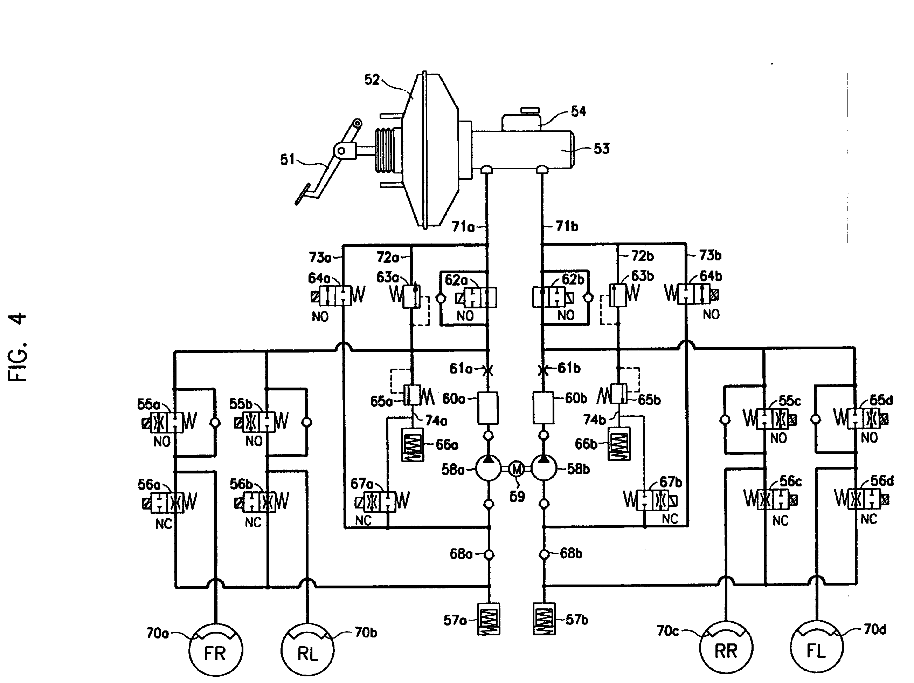

Fig. 4 is a hydraulic circuit illustrating a pressure reducing mode of a brake pressure control device for a vehicle according to the present invention during ABS operation.

If excessive braking force is applied to the wheel cylinders 70a, 70b, 70c and 70d or the braking force becomes higher than frictional force between the wheels FR, RL, RR and FL and the road surface due to a change in a road surface condition, the wheels FR, RL, RR and FL are locked and slide. Accordingly, in order to reduce the brake fluid pressure applied to the wheel cylinders 70a, 70b, 70c and 70d to prevent the wheels FR, RL, RR and FL from sliding, the ECU closes the electric shuttle valves 64a and 64b and the normal open solenoid inflow-valves 55a, 55b, 55c and 55d disposed on each inlet side of the wheel cylinders 70a, 70b, 70c and 70d to cut off the communication of the master cylinder 53 with the wheel cylinders 70a, 70b, 70c and 70d. At this state, the ECU opens the normal close solenoid outflow-valves 56a, 56b, 56c and 56d disposed on each outlet side of the wheel cylinders 70a, 70b, 70c and 70d to direct the brake fluid within the wheel cylinders 70a, 70b, 70c and 70d to the hydraulic pumps 58a and 58b, thereby reducing the brake fluid pressure applied to the wheel cylinders 70a, 70b, 70c and 70d to prevent the wheels FR, RL, RR and FL of the vehicle from sliding.

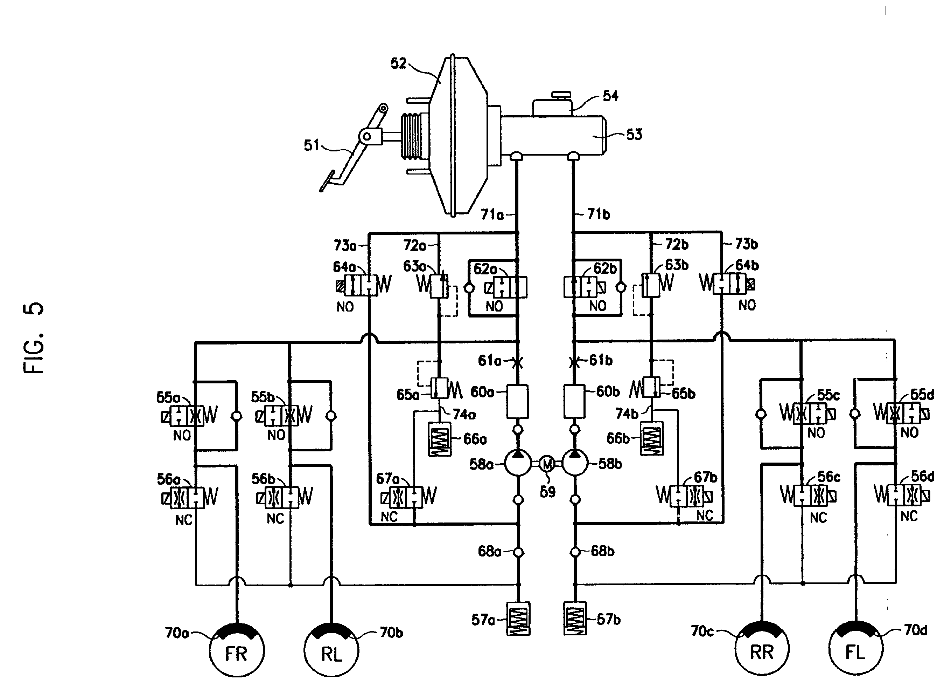

Fig. 5 is a hydraulic circuit illustrating a pressure increasing mode of a brake pressure control device for a vehicle according to the present invention during ABS operation.

If the brake fluid pressure applied to the wheel cylinders 70a, 70b, 70c and 70d is excessively reduced or the vehicle moves to a road having a high frictional coefficient, since the frictional force between the wheels FR, RL, RR and FL and the road becomes higher than the braking force applied to the wheel cylinders 70a, 70b, 70c and 70d, braking efficiency is reduced.

Therefore, the ECU closes the electric shuttle valves 64a and 64b, while opens the normal open solenoid inflow-valves 55a, 55b, 55c and 55d disposed on each inlet side of the wheel cylinders 70a, 70b, 70c and 70d. At this state, the ECU drives the motor 59 and the hydraulic pumps 58a and 58b for pumping the brake fluid fed to the hydraulic pumps 58a and 58b from the wheel cylinders 70a, 70b, 70c and 70d during the pressure reducing mode. At this point, the brake fluid pumped from the hydraulic pumps 58a and 58b receives pressure having a pulse wave, but changes into linear hydraulic pressure while passing through the high-pressure accumulators 60a and 60b and the orifices 61a and 61b. The linear hydraulic pressure is supplied to the wheel cylinders 70a, 70b, 70c and 70d via the normal open solenoid inflow-valves 55a, 55b, 55c and 55d, thereby increasing the braking force. And, the normal close solenoid outflow-valves 56a, 56b, 56c and 56d disposed on each outlet side of the wheel cylinders 70a, 70b, 70c and 70d are closed preferentially by the ECU.

In addition, if the brake fluid pressure applied to the wheel cylinders 70a, 70b, 70c and 70d reaches an optimal level at which optimal braking force is generated, the pressure should not be changed, that is, the brake fluid pressure should be maintained.

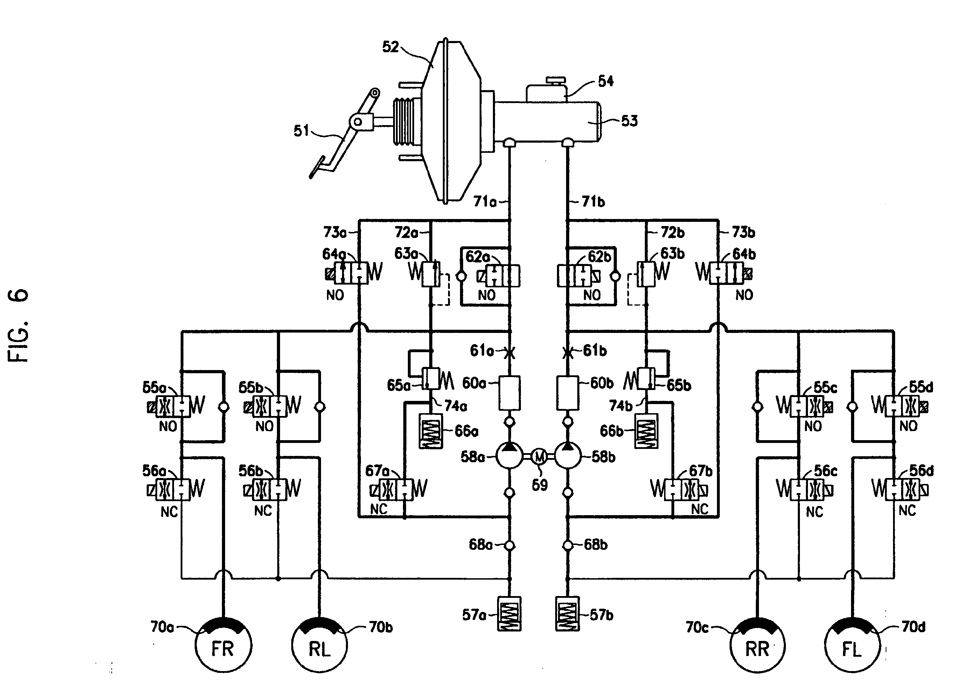

Fig. 6 is a hydraulic circuit illustrating a pressure unchanging mode of a brake pressure control device for a vehicle according to the present invention during ABS operation.

To maintain the brake fluid pressure applied to the wheel cylinders 70a, 70b, 70c and 70d, the ECU closes the electric shuttle valves 64a and 64b and the normal open solenoid inflow-valves 55a, 55b, 55c and 55d disposed on each inlet side of the wheel cylinders 70a, 70b, 70c and 70d to block the brake fluid being fed to the wheel cylinders 70a, 70b, 70c and 70d.

During this ABS operation, since each wheel of the vehicle is controlled independently, there may be a wheel cylinder which requires unchanged brake pressure, or increased brake pressure, or reduced brake pressure. Accordingly, the motor 59 should be driven continuously during ABS operation, thereby the brake fluid pressure being generated continuously from the hydraulic pumps 58a and 58b. At this time, when the brake fluid pressure discharged from the hydraulic pumps 58a and 58b increases above a certain level, the brake fluid is stored in the medium-pressure accumulators 66a and 66b via the second relief valves 65a and 65b disposed on the bypass fluid paths 74a and 74b, or is returned to the master cylinder 53.

In the meantime, the wheels FR, RL, RR and FL happen to slip when excessive driving force is transferred to them or when the vehicle initially accelerates on a slippery road. In order to prevent the slip of the wheels FR, RL, RR and FL, a brake traction control system(BTCS) is operated to provide adequate braking force to the wheels FR, RL, RR and FL by increasing or decreasing the driving force or reducing the engine power without depressing the brake pedal 51.

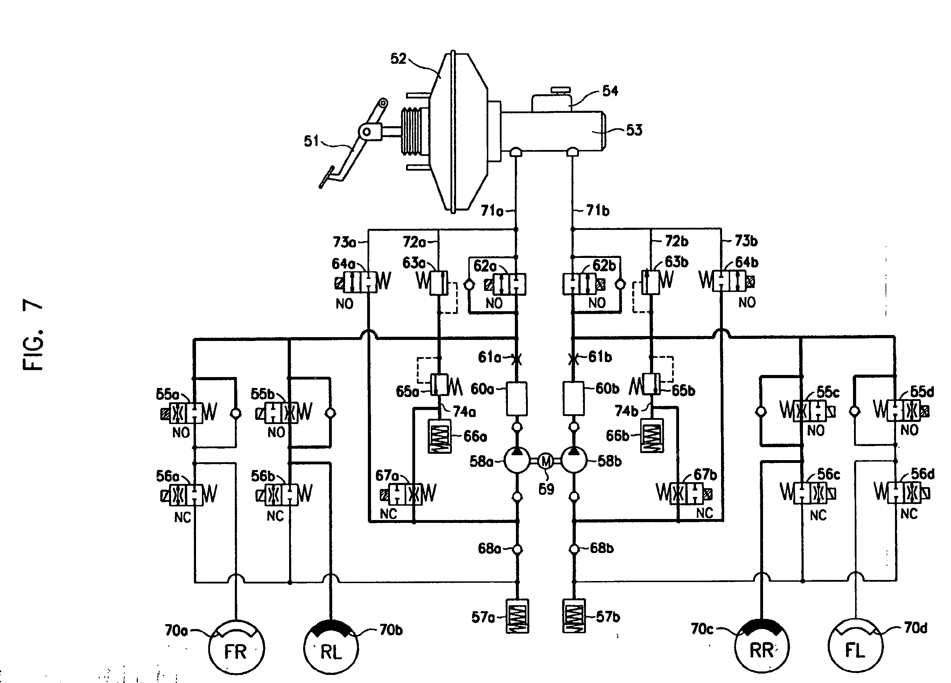

Fig. 7 is a hydraulic circuit illustrating a pressure applying mode of a brake pressure control device for a vehicle according to the present invention during BTCS operation.

The ECU starts BTCS operation when it detects the slip of the driving wheels RL and RR. Accordingly, the ECU closes the first normal open solenoid valves 62a and 62b and the shuttle valves 64a and 64b to cut off the communication of the master cylinder 53 with the wheel cylinders 70a, 70b, 70c and 70d, while opens the second normal close solenoid valves 67a and 67b connected to the medium-pressure accumulators 66a and 66b to communicate the medium-pressure accumulators 66a and 66b with the suction ports of the hydraulic pumps 58a and 58b. At the same time, the hydraulic pumps 58a and 58b are driven, so that the brake fluid pressure stored in the medium-pressure accumulators 66a and 66b changes into linear hydraulic pressure while passing through the high-pressure accumulators 60a and 60b and the orifices 61a and 61b and is fed to the wheel cylinders 70b and 70c of the driving wheels RL and RR via the normal open solenoid inflow-valves 55b and 55c, thereby increasing the braking force and diminishing the slip of the driving wheels RL and RR.

In addition, on driving the hydraulic pumps 58a and 58b, the ECU closes the normal open solenoid inflow-valves 55a and 55d of the driven wheels FR and FL so that the braking force is not transmitted to the wheel cylinders 70a and 70d of the driven wheels FR and FL.

In such a pressure applying mode of BTCS, since the brake fluid having a prescribed pressure is transmitted to the hydraulic pumps 58a and 58b from the medium-pressure accumulators 66a and 66b, the efficiency of the pumps 58a and 58b is improved and the increasing velocity of the brake fluid pressure becomes higher, thereby applying the required brake fluid pressure to the wheel cylinders 70b and 70c of the driving wheels RL and RR more rapidly.

Fig. 3 is a hydraulic circuit illustrating a pressure decreasing mode of a brake pressure control device for a vehicle according to the present invention during BTCS operation.

If the accelerating force of vehicle is excessively reduced due to the pressure applying mode, the brake fluid pressure applied to the wheel cylinders 70b and 70c of the driving wheels RL and RR should be decreased at an optimal level.

During the pressure decreasing mode, the ECU closes all normal open solenoid inflow-valves 55a, 55b, 55c and 55d disposed on each inlet side of the wheel cylinders 70a, 70b, 70c and 70d in the state of closing the electric shuttle valves 64a and 64b, while opens the normal close solenoid outflow-valves 56b and 56c disposed on each outlet side of the wheel cylinders 70b and 70c of the driving wheels RL and RR, so that the brake fluid within the wheel cylinders 70b and 70c flows to the suction port of the hydraulic pumps 58a and 58b, thereby the braking force applied to the wheel cylinders 70b and 70c being reduced and the driving wheels RL and RR being accelerated.

In addition, if the brake fluid pressure applied to the wheel cylinders 70b and 70c of the driving wheels RL and RR reaches an optimal level at which optimal braking force is generated, the brake fluid pressure should not be changed, that is, the brake fluid pressure should be maintained.

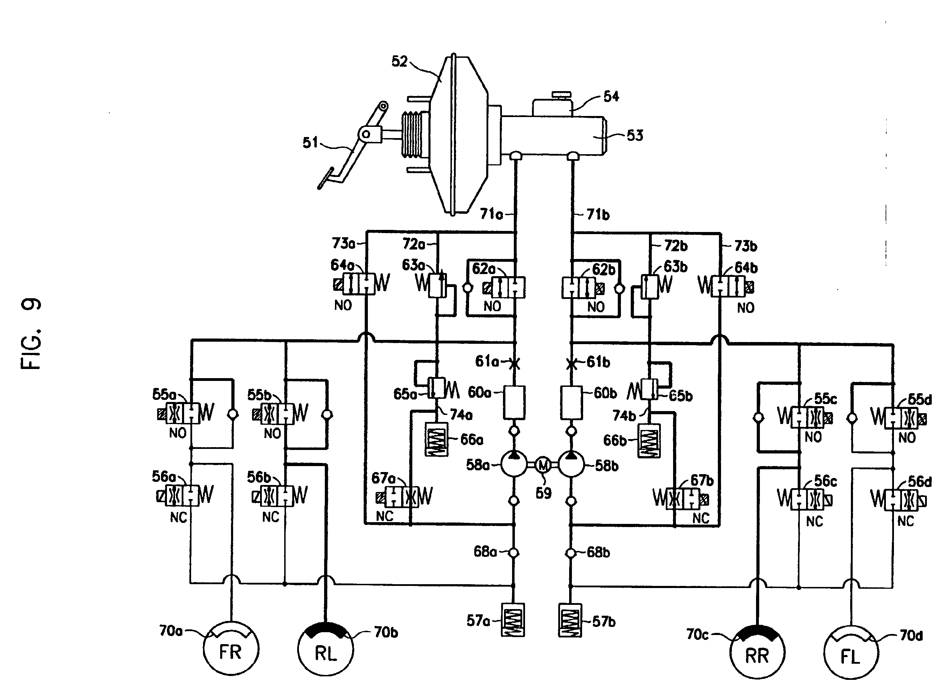

Fig. 9 is a hydraulic circuit illustrating a pressure unchanging mode of a brake pressure control device for a vehicle according to the present invention during BTCS operation.

To maintain the brake fluid pressure applied to the wheel cylinders 70b and 70c of the driving wheels RL and RR, the ECU closes the normal open solenoid inflow-valves 55b and 55c disposed on each inlet side of the wheel cylinders 70b and 70c in the state of closing the electric shuttle valves 64a and 64b, so that the brake fluid pressure generated from the hydraulic pumps 58a and 58b can not be fed to the wheel cylinders 70b and 70c any more. At this time, since the driving wheels RL and RR are controlled independently, there may be a wheel cylinder which requires unchanged brake pressure, or increased brake pressure, or reduced brake pressure. Accordingly, the motor 59 should be driven continuously during BTCS operation, thereby the brake fluid pressure being generated continuously from the hydraulic pumps 58a and 58b. At this time, if the brake fluid pressure discharged from the hydraulic pumps 58a and 58b increases above a certain level, the brake fluid is stored in the medium-pressure accumulators 66a and 66b via the second relief valves 65a and 65b disposed on the bypass fluid paths 74a and 74b, or is returned to the master cylinder 53 via the first relief valves 64a and 64b disposed on the second fluid paths 72a and 72b.

In the mean time, specially when the vehicle travels or corners at high speed as well as when ABS or BTCS is operated, it happens that the driver can not drive the car at driver's will by the external force. In the worst case, the body of vehicle may be spined. In order to prevent this problem, the vehicle dynamic control(VDC) is operated for enhancing a traveling stability by applying proper brake fluid pressure to the wheels FR, RL, RR and FL.

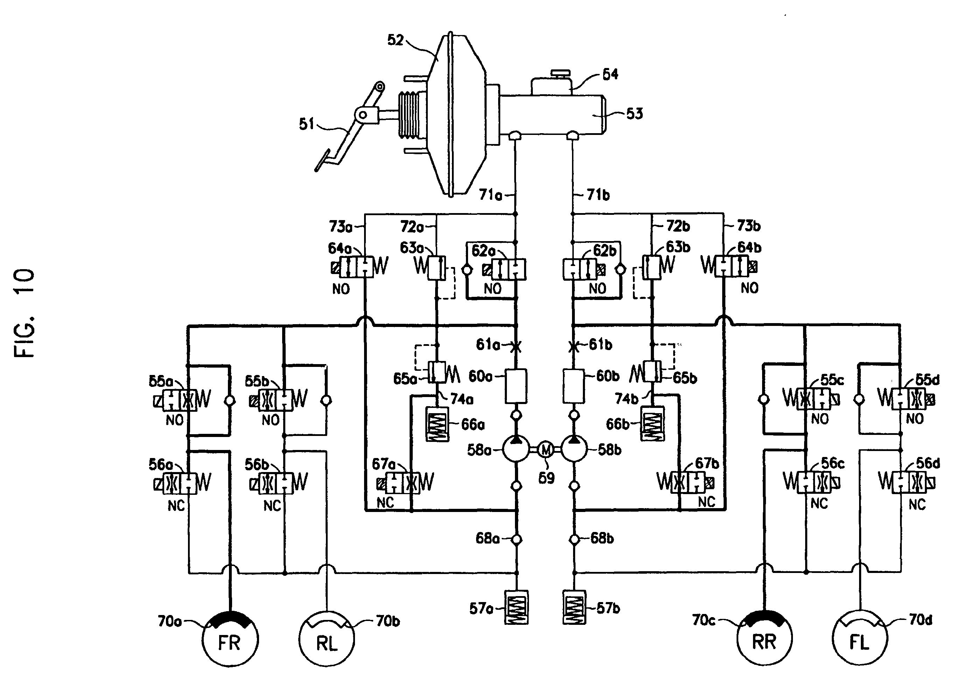

For instance, the reference angle value, at which the driver can turn the steering wheel with reference to the current velocity of the vehicle, is inputted to the ECU in advance. If the driver turns the steering wheel to right or left more than the reference angle value, a so-called over-steering phenomenon of that the car tends to incline to inside of the cornering direction and be spined in the worst case may happen. And, if the car corners on a slippery road, a so-called under-steering phenomenon of that the car tends to incline to outside of the cornering direction may happen. TO prevent these phenomena, the ECU applies the brake fluid pressure to the outer wheels of the cornering direction of the vehicle in the over-steering condition, while the ECU applies the brake fluid pressure to the inner wheels in the under-steering condition, thereby enhancing a traveling stability, which will be described more in detail with reference to Fig. 10.

Fig. 10 is a hydraulic circuit illustrating VDC operation of a brake pressure control device for a vehicle according to the present invention. It is supposed that RL and FL are inner wheels of the cornering direction of the vehicle and FR and RR are outer wheels.

When the vehicle does not travel at driver's will, the ECU closes the first normal open solenoid valves 62a and 62b and the electric shuttle valves 64a and 64b to cut off the communication of the master cylinder 53 with the wheel cylinders 70a, 70b, 70c and 70d, while opens the second normal close solenoid valves 67a and 67b connected to the medium-pressure accumulators 66a and 66b to communicate the medium-pressure accumulators 66a and 66b with each suction port of the hydraulic pumps 58a and 58b. At the same time, the hydraulic pumps 58a and 58b are driven, so that the brake fluid pressure stored in the medium-pressure accumulators 66a and 66b changes into linear hydraulic pressure while passing through the high-pressure accumulators 60a and 60b and the orifices 61a and 61b and is fed to the wheel cylinders 70a, 70b, 70c and 70d via the normal open solenoid inflow-valves 55a, 55b, 55c and 55d.

At this state, in the over-steering condition of that the car tends to incline to inside of the cornering direction, the ECU closes the normal open solenoid inflow-valves 55b and 55d of the inner wheels RL and FL of the cornering direction so that the brake fluid pressure is prevented from being applied to the corresponding wheel cylinders 70b and 70d, while maintains to open the inflow-valves 55a and 55c of the outer wheels FR and RR so that the brake fluid pressure is applied to the corresponding wheel cylinders 70a and 70c. By such an operation, a turning moment which acts opposite to the cornering direction of the vehicle generates on the outer wheels FR and RR, thereby preventing the vehicle from inclining to inside of the cornering direction and being spined.

In addition, in the under-steering condition of that the car tends to incline to outside of the cornering direction, the ECU applies the brake fluid pressure to only wheel cylinders 70b and 70d of the inner wheels RL and FL, contrary to the over-steering condition, so that a turning moment generating on the inner wheels RL and FL enables the vehicle to travel stably. Since VDC operation in the under-steering condition is similar to that of the over-steering condition, the detail description is omitted.

As described above, in VDC operation, since the brake fluid having a prescribed pressure is transmitted to the hydraulic pumps 58a and 58b from the medium-pressure accumulators 66a and 66b, the efficiency of the pumps 58a and 58b is improved and the increasing velocity of the brake fluid pressure becomes higher, thereby applying the required brake fluid pressure to the wheel cylinders 70a and 70c of the outer wheels FR and RR or the wheel cylinders 70b and 70d of the inner wheels RL and FL more rapidly.

In the meantime, the motor 59 is driven continuously during VDC operation, thereby the brake fluid pressure being generated continuously from the hydraulic pumps 58a and 58b. At this time, if the brake pressure discharged from the hydraulic pumps 58a and 58b increases above a certain level, the brake fluid is stored in the medium-pressure accumulators 66a and 66b via the second relief valves 65a and 65b disposed on the bypass fluid paths 74a and 74b, or is returned to the master cylinder 53 via the first relief valves 64a and 64b disposed on the second fluid paths 72a and 72b.

As described above, in the brake pressure control device for a vehicle according to the present invention, there is no need to control the hydraulic pumps 58a and 58b according to respective mode(a pressure increasing mode, a pressure reducing mode, and a pressure unchanging mode) of ABS, or BTCS, or VDC. That is, although the motor 59 is driven continuously during ABS, or BTCS, or VDC operation, the brake fluid pressure increased above a certain level is stored in the medium-pressure accumulators 66a and 66b via the second relief valves 65a and 65b or is returned to the master cylinder 53 via the first relief valves 64a and 64b, thus the control of the hydraulic pumps 58a and 58b is considerably simple.

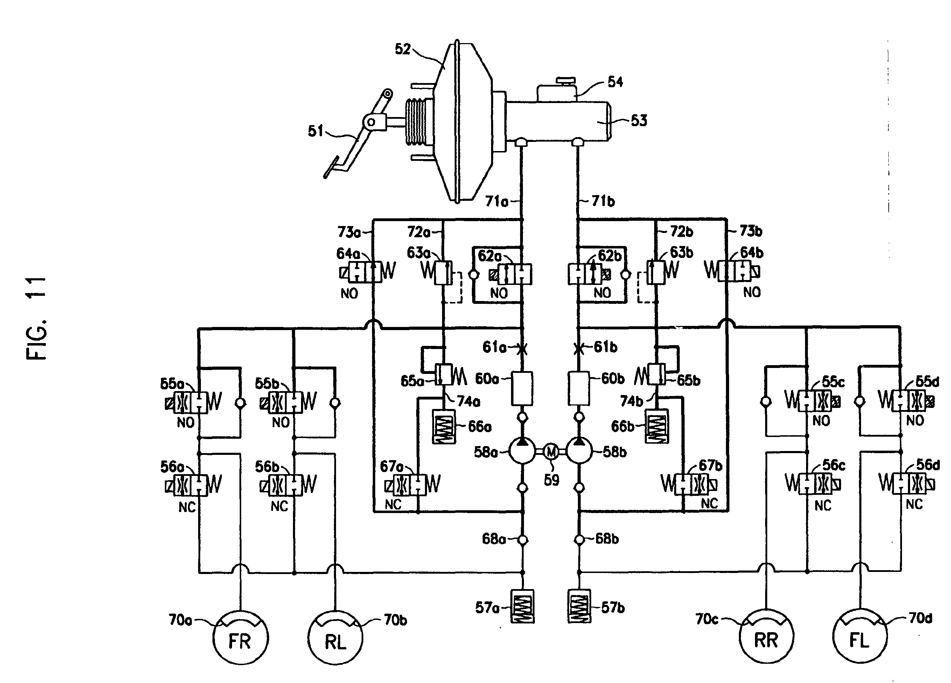

Fig. 11 is a hydraulic circuit illustrating an operation of storing brake fluid pressure in a medium-pressure accumulator of a brake pressure control device for a vehicle according to the present invention.

Right after a vehicle is taken out of a warehouse or when a vehicle is parked for a long term without traveling, the above operation to store brake fluid pressure in the medium-pressure accumulators 66a and 66b during ABS or BTCS or VDC is not executed and the brake fluid existing within the accumulators 66a and 66b leaks through the second relief valves 65a and 65b and the second normal close solenoid valves 67a and 67b due to the leakage problem occurring essentially in all kinds of valve. By these reasons, when no brake fluid is stored in the medium-pressure accumulators 66a and 66b, BTCS or VDC operation can not be fulfilled smoothly since the increasing velocity of the brake fluid pressure becomes low. Therefore, to prevent this problem, a fluid detecting sensor(not shown) is installed in the medium-pressure accumulators 66a and 66b. If the brake fluid existing within the medium-pressure accumulators 66a and 66b is detected to be decreased below a certain level by the fluid detecting sensor, the ECU closes the normal open solenoid inflow-valves 55a, 55b, 55c and 55d and the first normal open solenoid valves 62a and 62b to cut off the communication of the master cylinder 53 with the wheel cylinders 70a, 70b, 70c and 70d, and at the same time, drives the hydraulic pumps 58a and 58b so as to suck the brake fluid within the master cylinder 53 via the electric shuttle valves 64a and 64b disposed on the third fluid paths 73a and 73b and discharge. At this time, since the inflow-valves 55a, 55b, 55c and 55d and the first solenoid valves 62a and 62b are maintained closed, the brake fluid pressure is increased. And then, the brake fluid whose pressure is increased above a certain level is directed to the medium-pressure accumulators 66a and 66b via the second relief valves 65a and 65b disposed on the bypass fluid paths 74a and 74b.

In addition, in the brake pressure control device for a vehicle according to the present invention, the brake fluid pressure can be stored in the medium-pressure accumulators 66a and 66b without the fluid detecting sensor, which will be described hereinafter.

As described above, the brake fluid pressure is continuously stored in the medium-pressure accumulators 66a and 66b during the brake pressure control operation such as ABS or BTCS or VDC. However, if the vehicle is parked for a long term or the brake pressure control operation is never executed during long-time traveling, the brake fluid existing within the accumulators 66a and 66b may leak through the second relief valves 65a and 65b and the second normal close solenoid valves 67a and 67b, as described above. To prevent this problem, whenever the driver starts the vehicle, the ECU closes the normal open solenoid inflow-valves 55a, 55b, 55c and 55d and the first normal open solenoid valves 62a and 62b to cut off the communication of the master cylinder 53 with the wheel cylinders 70a, 70b, 70c and 70d, and drives the hydraulic pumps 58a and 58b so as to suck the brake fluid within the master cylinder 53 via the electric shuttle valves 64a and 64b and discharge, thereby the brake fluid being directed to the medium-pressure accumulators 66a and 66b via the second relief valves 65a and 65b. After this, the ECU counts the time and drives the hydraulic pumps 58a and 58b by periods set to the ECU so as to store the brake fluid in the medium-pressure accumulators 66a and 66b repeatedly. It is preferable that the above storing operation is executed for 1 second per 4 hours considering the brake fluid leakage through the second relief valves 65a and 65b and the second solenoid valves 67a and 67b. However, if the brake pressure control operation, such as ABS or BTCS or VDC, is executed before it reaches the setting period, the brake fluid pressure is stored in the medium-pressure accumulators 66a and 66b, as described above. Therefore, the ECU reacts the time counted before and recounts the time after the brake pressure control operation is finished until it reaches the setting period for performing the storing operation.

In addition, if the brake fluid remains in the medium-pressure accumulators 66a and 66b without leaking even though it reaches the setting period, the brake fluid discharged from the hydraulic pumps 58a and 58b is returned to the master cylinder 53 via the first relief valves 63a and 63b, thus the brake pressure control device is prevented from being affected by the excessively increased brake fluid pressure.

As described above in detail, in the brake pressure control device for a vehicle according to the present invention, during BTCS or VDC operation, since brake fluid having a prescribed pressure is transmitted to a hydraulic pump for ABS from a medium-pressure accumulator, the efficiency of the pump is improved and the increasing velocity of brake fluid pressure becomes higher, thereby applying the required brake fluid pressure to each wheel cylinder more rapidly so as to control the traveling unstability of a vehicle effectively in its early stages. In addition, this invention has further advantages in that since the conventional large-sized accumulator and additional hydraulic pump are needless and a relatively small-sized hydraulic pump for ABS can be used in BTCS or VDC operation, the brake pressure control device of this invention becomes light and small-sized, and manufacturing cost is reduced.

## Claims

1. A brake pressure control device for a vehicle, the control device comprising:
a master cylinder (53) for forming brake pressure using fluid;
a wheel cylinder (70a, 70b, 70c, 70d) exerting braking force to each wheel (FR, FL, RR, RL) of the vehicle by receiving the brake pressure;
a normally-open solenoid inflow-valve (55a, 55b, 55c, 55d) disposed on an inlet side of the wheel cylinder for controlling flow of the brake fluid pressure;
a normally-closed solenoid outflow-valve (56a, 56b, 56c, 56d) disposed on an outlet side of the wheel cylinder for controlling flow of the brake fluid pressure;
a hydraulic pump (58a, 58b) for pumping the brake fluid pressure to the wheel cylinder;
an electronic control unit for controlling flow of the brake fluid pressure applied to the wheel cylinder;
a first normally-open solenoid valve (62a, 62b) disposed in a first fluid path (71a, 71b) connecting a discharging port of the hydraulic pump to an outlet side of the master cylinder to direct the brake fluid pressure discharged from the master cylinder to the wheel cylinder via the inflow-valve when a braking operation is executed;
a normally-open electric shuttle valve (64a, 64b) disposed in a fluid path connecting the outlet side of the master cylinder to a suction port of the hydraulic pump;
a medium-pressure accumulator (66a, 66b) disposed in a bypass fluid path (74a, 74b) bypassing the brake fluid pressure discharged from the discharging port of the hydraulic pump to the suction port thereof to store the brake fluid having prescribed pressure; and
a second normally-closed solenoid valve (67a, 67b) disposed in the bypass fluid path between the medium-pressure accumulator and the suction port of the hydraulic pump to maintain the brake fluid pressure stored in the medium-pressure accumulator;
wherein, at the beginning of brake traction control system or vehicle dynamic control operation, the electronic control unit closes the first normally-open solenoid valve and the shuttle valve to cut off the communication of the master cylinder with the wheel cylinder, opens the second normally-closed solenoid valve to communicate the medium-pressure accumulator with the suction port of the hydraulic pump, and drives the hydraulic pump, whereby the brake fluid pressure stored in the medium-pressure accumulator is fed to the wheel cylinder to increase braking force; **characterised in that** the control device further comprises a relief valve (65a, 65b) disposed in the bypass fluid path between the discharging port of the hydraulic pump and the medium-pressure accumulator to direct the brake fluid discharged from the hydraulic pump to the medium-pressure accumulator when the brake fluid pressure increases above a certain level during brake traction control system or vehicle dynamic control operation, **characterised by** a second fluid path (72a, 72b) connecting the discharging port of the hydraulic pump to the outlet side of the master cylinder, and a further relief valve (63a, 63b) disposed in the second fluid path to direct the brake fluid discharged from the hydraulic pump to the master cylinder when the brake fluid pressure increases above a certain level during brake traction control system or vehicle dynamic control operation.

2. A brake pressure control device as claimed in claim 1, further comprising a fluid detecting sensor installed in the medium-pressure accumulator (66a, 66b).

3. A brake pressure control device as claimed in claim 2, wherein, if the brake fluid existing within the medium-pressure accumulator (66a, 66b) is detected to be decreased below a certain level by the fluid detecting sensor, the electronic control unit closes the normally-open solenoid inflow-valve (55a, 55b, 55c, 55d) and the first normally-open solenoid valve (62a, 62b) to cut off the communication of the master cylinder (53) with the wheel cylinder (70a, 70b, 70c, 70d), and drives the hydraulic pump (58a, 58b) so as to suck the brake fluid within the master cylinder via the electric shuttle valve (64a, 64b) and discharge, whereby the brake fluid pressure is directed to the medium-pressure accumulator via the relief valve (65a, 65b).

4. A brake pressure control device as claimed in any one of claims 1 to 3, wherein, whenever a driver starts the vehicle, the electronic control unit closes the normally-open solenoid inflow-valve (55a, 55b, 55c, 55d) and the first normally-open solenoid valve (62a, 62b) to cut off the communication of the master cylinder (53) with the wheel cylinder (70a, 70b, 70c, 70d), and drives the hydraulic pump (58a, 58b) so as to suck the brake fluid within the master cylinder via the electric shuttle valve (64a, 64b) and discharge, whereby the brake fluid is directed to the medium-pressure accumulator (66a, 66b) via the relief valve (65a, 65b).

5. A brake pressure control device as claimed in claim 4, wherein the electronic control unit counts the time and drives the hydraulic pump (58a, 58b) by periods set by the electronic control unit so as to store the brake fluid in the medium-pressure accumulator (66a, 66b) repeatedly.

6. A brake pressure control device as claimed in claim 5, wherein, if the brake pressure control operation such as anti-lock brake system or brake traction control system or vehicle dynamic control is executed before it reaches the setting period, the electronic control unit resets the time counted before, and recounts the time after, the brake pressure control operation is finished.

7. A brake pressure control device as claimed in any one of claims 1 to 6, wherein the hydraulic pump (58a, 58b) is driven continuously during anti-lock brake system or brake traction control system or vehicle dynamic control operation.

## Patentansprüche

1. Vorrichtung zum Steuern des Bremsdrucks bei einem Fahrzeug, welche folgendes aufweist:
einen Steuerzylinder (53) zum Aufbauen des Bremsdrucks unter Verwendung eines Strömungsmittels;
einen Radzylinder (70a, 70b, 70c, 70d), welcher unter Übernahme des Bremsdrucks auf jedes Rad (FR, FL, RR, RL) des Fahrzeugs einen Bremsdruck ausübt;
ein drucklos geöffnetes Zulauf-Magnetventil (55a, 55b, 55c, 55d), das auf einer Einlassseite des Radzylinders zum Steuern der Weiterleitung des Bremsflüssigkeitsdrucks angeordnet ist;
ein drucklos geschlossenes Auslauf-Magnetventil (56a, 56b, 56c, 56d), das auf einer Auslassseite des Radzylinders zum Steuern der Weiterleitung des Bremsflüssigkeitsdrucks angeordnet ist;
eine Hydraulikpumpe (58a, 58b) zum Weiterpumpen des Bremsflüssigkeitsdrucks zum Radzylinder;
eine elektronische Steuereinheit zum Steuern der Weiterleitung des an den Radzylinder angelegten Bremsflüssigkeitsdrucks;
ein erstes drucklos geöffnetes Magnetventil (62a, 62b), das in einem ersten Flüssigkeitsströmungsweg (7a, 7b) angeordnet ist, welcher eine Förderöffnung der Hydraulikpumpe mit einer Auslassseite des Steuerzylinders verbindet, um den aus dem Steuerzylinder ausgeleiteten Bremsflüssigkeitsdruck über das Zulaufventil zum Radzylinder zu leiten, wenn ein Bremsvorgang ausgeführt wird;
ein drucklos geöffnetes Durchgangs-Elektroventil (64a, 64b), das in einem Flüssigkeitsströmungsweg angeordnet ist, welcher die Auslassseite des Steuerzylinders mit einer Ansaugöffnung der Hydraulikpumpe verbindet;
einen Medien-Druckspeicher (66a, 66b), welcher in einem Neben-Flüssigkeitsströmungsweg (74a, 74b) angeordnet ist, der den aus der Förderöffnung der Hydraulikpumpe abgegebenen Bremsflüssigkeitsdruck zu deren Ansaugöffnung umleitet, um die Bremsflüssigkeit mit einem vorgeschriebenen Druck zu speichern, und
ein zweites drucklos geschlossenes Magnetventil (67a, 67b), das in dem Neben-Flüssigkeitsströmungsweg zwischen dem Medien-Druckspeicher und der Ansaugöffnung der Hydraulikpumpe angeordnet ist und den in dem Medien-Druckspeicher gespeicherten Bremsflüssigkeitsdruck aufrecht erhält;
bei welcher beim Einsetzen des Betriebs des Brems-Traktionssteuersystems oder der dynamischen Fahrzeugregelung die elektronische Steuereinheit das erste drucklos geöffnete Magnetventil und das Durchgangsventil schließt, um die Strömungsverbindung zwischen dem Steuerzylinder und dem Radzylinder zu sperren, das zweite drucklos geschlossene Magnetventil öffnet, um die Strömungsverbindung zwischen dem Medien-Druckspeicher und der Ansaugöffnung der Hydraulikpumpe herzustellen, und die Hydraulikpumpe antreibt, wodurch der in dem Medien-Druckspeicher gespeicherte Bremsflüssigkeitsdruck dem Radzylinder zur Erhöhung der Bremskraft zugeführt wird,
**dadurch gekennzeichnet, dass** die Regelvorrichtung des Weiteren ein Entlastungsventil (65a, 65b) aufweist, das in dem Neben-Flüssigkeitsströmungsweg zwischen der Förderöffnung der Hydraulikpumpe und dem Medien-Druckspeicher angeordnet ist, um die aus der Hydraulikpumpe abgegebene Bremsflüssigkeit zu dem Medien-Druckspeicher zu leiten, wenn der Bremsflüssigkeitsdruck während des Betriebs des Brems-Traktionssteuersystems oder der dynamischen Fahrzeugregelung über einen bestimmten Wert hinaus ansteigt, **gekennzeichnet durch** einen zweiten Flüssigkeitsströmungsweg (72a, 72b), welcher die Förderöffnung der Hydraulikpumpe mit der Auslassseite des Steuerzylinders verbindet, sowie ein weiteres Entlastungsventil (63a, 63b), das in dem zweiten Flüssigkeitsströmungsweg angeordnet ist, um die aus der Hydraulikpumpe abgegebene Bremsflüssigkeit zu dem Steuerzylinder zu leiten, wenn der Bremsflüssigkeitsdruck während des Betriebs des Brems-Traktionssteuersystems oder der dynamischen Fahrzeugregelung über einen bestimmten Wert hinaus ansteigt.

2. Vorrichtung zum Steuern des Bremsdrucks nach Anspruch 1, welche außerdem einen in dem Medien-Druckspeicher (66a, 66b) eingebauten Sensor zur Erfassung der Flüssigkeit aufweist.

3. Vorrichtung zum Steuern des Bremsdrucks nach Anspruch 2, bei welcher dann, wenn von dem Sensor zur Erfassung der Flüssigkeit erfasst wird, dass die in dem Medien-Druckspeicher (66a, 66b) vorhandene Bremsflüssigkeit unter einen bestimmten Pegelstand abgesunken ist, die elektronische Steuereinheit das drucklos geöffnete Zulauf-Magnetventil (55a, 55b, 55c, 55d) und das erste drucklos geöffnete Magnetventil (62a, 62b) schließt, um die Verbindung zwischen dem Steuerzylinder (53) und dem Radzylinder (70a, 70b, 70c, 70d) zu sperren, und die Hydraulikpumpe in der Weise betreibt, dass sie die Bremsflüssigkeit in dem Steuerzylinder über das Durchgangs-Elektroventil (64a, 64b) ansaugt und fördert, wodurch der Bremsflüssigkeitsdruck über das Entlastungsventil (65a, 65b) zu dem Medien-Druckspeicher geleitet wird.

4. Vorrichtung zum Steuern des Bremsdrucks nach einem der Ansprüche 1 bis 3, bei welcher die elektronische Steuereinheit das drucklos geöffnete Zulauf-Magnetventil (55a, 55b, 55c, 55d) und das erste drucklos geöffnete Magnetventil (62a, 62b) schließt, sobald ein Fahrer das Fahrzeug startet, um so den Strömungsweg zwischen dem Steuerzylinder (53) und dem Radzylinder (70a, 70b, 70c, 70d) zu sperren, und die Hydraulikpumpe (53a, 58b) in Betrieb setzt, um die Bremsflüssigkeit im Steuerzylinder über das Durchgangs-Elektroventil (64a, 64b) anzusaugen und zu fördern, wodurch die Bremsflüssigkeit über das Entlastungsventil (65a, 65b) zu dem Medien-Druckspeicher geleitet wird.

5. Vorrichtung zum Steuern des Bremsdrucks nach Anspruch 4, bei welcher die elektronische Steuereinheit die Zeit zählt und die Hydraulikpumpe (58a, 58b) periodenweise antreibt, wobei die Perioden von der elektronischen Steuereinheit so eingestellt sind, dass die Bremsflüssigkeit wiederholt in dem Medien-Druckspeicher abgespeichert wird.

6. Vorrichtung zum Steuern des Bremsdrucks nach Anspruch 5, bei welcher die elektronische Steuereinheit dann, wenn der Vorgang zur Bremsdrucksteuerung wie zum Beispiel als Antiblockier-Bremssystem oder Brems-Traktionssteuersystem oder als dynamische Fahrzeugregelung ausgeführt wird, ehe die Einstellperiode erreicht ist, die zuvor gezählte Zeit rücksetzt und die Zeit nach Beendigung des Vorgangs zur Bremsdrucksteuerung erneut zählt.

7. Vorrichtung zum Steuern des Bremsdrucks nach einem der Ansprüche 1 bis 6, bei welcher die Hydraulikpumpe (58a, 58b) während des Betriebs des Antiblockier-Bremssystems oder des Brems-Traktionssteuersystems oder während der dynamischen Fahrzeugregelung kontinuierlich betrieben wird.

## Revendications

1. Système de contrôle de pression de freinage pour véhicule, le système de contrôle comprenant :
un maître-cylindre (53) pour créer une pression de freinage utilisant un fluide ;
un cylindre de roue (70a, 70b, 70c, 70d) exerçant une force de freinage sur chaque roue (FR, FL, RR, RL) du véhicule par la réception de la pression de freinage ;
une électrovanne d'entrée normalement ouverte (55a, 55b, 55c, 55d) disposée du côté entrée du cylindre de roue pour contrôler le débit de la pression de fluide de freinage ;
une électrovanne de sortie normalement fermée (56a, 56b, 56c, 56d) disposée sur un côté sortie du cylindre de roue pour contrôler le débit de la pression de fluide de freinage ;
une pompe hydraulique (58a, 58b) pour pomper la pression de fluide de freinage dans le cylindre de roue;
une unité de contrôle électronique pour contrôler le débit de la pression de fluide de freinage appliquée au cylindre de roue ;
une première électrovanne normalement ouverte (62a, 62b) disposée dans un premier trajet de fluide (71a, 71b) reliant un orifice de sortie de la pompe hydraulique à un côté sortie du maître-cylindre pour diriger la pression de fluide de freinage sortant du maître-cylindre vers le cylindre de roue via la valve d'entrée lorsqu'une opération de freinage est exécutée ;
une valve navette électrique normalement ouverte (64a, 64b) disposée dans un trajet de fluide reliant le côté sortie du maître-cylindre à un orifice d'aspiration de la pompe hydraulique ;
un accumulateur à pression moyenne (66a, 66b) disposé dans un trajet de fluide de contournement (74a, 74b) contournant la pression de fluide de freinage sortant de l'orifice de sortie de la pompe hydraulique vers son port d'aspiration pour stocker le fluide de freinage ayant une pression prescrite ; et
une seconde électrovanne normalement fermée (67a, 67b) disposée dans le trajet de fluide de contournement entre l'accumulateur à pression moyenne et l'orifice d'aspiration de la pompe hydraulique pour maintenir la pression de fluide de freinage stockée dans l'accumulateur à pression moyenne ;
dans lequel, au début du fonctionnement du système de contrôle de l'effort de freinage ou du contrôle dynamique du véhicule, l'unité de contrôle électronique ferme la première électrovanne normalement ouverte et la valve navette pour couper la communication du maître-cylindre avec le cylindre de roue, ouvre la seconde électrovanne normalement fermée pour faire communiquer l'accumulateur à pression moyenne avec l'orifice d'aspiration de la pompe hydraulique, et commande la pompe hydraulique, ce par quoi la pression de fluide de freinage stockée dans l'accumulateur à pression moyenne est amenée au cylindre de roue afin d'accroître l'effort de freinage ; **caractérisé en ce que** le dispositif de contrôle comprend en outre un clapet de décharge (65a, 65b) disposé dans le trajet de fluide de contournement entre l'orifice de sortie de la pompe hydraulique et l'accumulateur à pression moyenne pour diriger le fluide de freinage sortant de la pompe hydraulique vers l'accumulateur à pression moyenne lorsque la pression de fluide de freinage augmente au-dessus d'un certain niveau pendant le fonctionnement du système de contrôle d'effort de freinage ou du contrôle dynamique du véhicule, **caractérisé par** un second trajet de fluide (72a, 72b) connectant l'orifice de sortie de la pompe hydraulique au côté sortie du maître-cylindre, et un autre clapet de décharge (63a, 63b) disposé dans le second trajet de fluide pour diriger le fluide de freinage sortant de la pompe hydraulique vers le maître-cylindre lorsque la pression de fluide de freinage augmente au-dessus d'un certain niveau pendant le fonctionnement du système de contrôle d'effort de freinage ou du contrôle dynamique du véhicule.

2. Système de contrôle de la pression de freinage selon la revendication 1, comprenant en outre un détecteur de fluide installé dans l'accumulateur à pression moyenne (66a, 66b).

3. Système de contrôle de la pression de freinage selon la revendication 2 dans lequel, si le fluide de freinage se trouvant dans l'accumulateur à pression moyenne (66a, 66b) est détecté comme ayant diminué à un niveau inférieur à un certain niveau par le détecteur de fluide, l'unité de contrôle électronique ferme l'électrovanne d'entrée normalement ouverte (55a, 55b, 55c, 55d) et la première électrovanne normalement ouverte (62a, 62b) pour couper la communication du maître-cylindre (53) avec le cylindre de roue (70a, 70b, 70c, 70d) et commande la pompe hydraulique (58a, 58b) de façon à aspirer le fluide de freinage dans le maître-cylindre via la valve navette électrique (64a, 64b) et l'évacuer, ce par quoi la pression de fluide de freinage est dirigée vers l'accumulateur à moyenne pression via le clapet de décharge (65a, 65b).

4. Système de contrôle de la pression de freinage selon l'une des revendications 1 à 3, dans lequel, lorsqu'un conducteur démarre le véhicule, l'unité de contrôle électronique ferme l'électrovanne d'entrée normalement ouverte (55a, 55b, 55c, 55d) et la première électrovanne normalement ouverte (62a, 62b) pour couper la communication du maître-cylindre (53) avec le cylindre de roue (70a, 70b, 70c, 70d) et commande la pompe hydraulique (58a, 58b) de façon à aspirer le fluide de freinage dans le maître-cylindre via la valve navette électrique (64a, 64b) et l'évacuer, ce par quoi le fluide de freinage est dirigé vers l'accumulateur à moyenne pression (66a, 66b) via le clapet de décharge (65a, 65b).

5. Système de contrôle de la pression de freinage selon la revendication 4, dans lequel l'unité de contrôle électronique compte le temps et commande la pompe hydraulique (58a, 58b) par périodes définies par l'unité de contrôle électronique de façon à stocker de façon répétée le fluide de freinage dans l'accumulateur à moyenne pression (66a, 66b).

6. Système de contrôle de la pression de freinage selon la revendication 5, dans lequel, si le fonctionnement du contrôle de pression de freinage tel qu'un système de freinage anti-blocage ou système de contrôle de l'effort de traction ou contrôle dynamique du véhicule est exécuté avant d'atteindre la pression de repos, l'unité de contrôle électronique réinitialise le temps compté auparavant, et recompte le temps ensuite, le fonctionnement du contrôle de la pression de freinage est terminé.

7. Système de contrôle de la pression de freinage selon l'une des revendications 1 à 6, dans lequel la pompe hydraulique (58a, 58b) est entraînée de façon continue pendant le fonctionnement du système de freinage anti-blocage ou du système de contrôle d'effort de traction ou du contrôle dynamique de véhicule.
